# EUROPÄISCHE PATENTSCHRIFT

(11) **EP 3 437 477 B1**
(45) Veröffentlichungstag und Bekanntmachung des Hinweises auf die Patenterteilung: **18.03.2020**
(21) Anmeldenummer: 18182821.1
(22) Anmeldetag: 11.07.2018
(51) Int. Cl.: A21B 3/00, A21B 3/04, F24C 14/00, F24C 15/20

(54) **GARGERÄT UND VERFAHREN ZUM BETREIBEN EINES GARGERÄTS**
COOKING DEVICE AND METHOD FOR OPERATING A COOKING DEVICE
APPAREIL DE CUISSON ET MÉTHODE D'UTILISATION D'UN APPAREIL DE CUISSON

(30) Priorität: 31.07.2017 DE 102017117262
(43) Veröffentlichungstag der Anmeldung: 06.02.2019
(73) Patentinhaber: Miele & Cie. KG, 33332 Gütersloh (DE)
(72) Erfinder: Sillmen, Ulrich, 33332 Gütersloh (DE)

(56) Entgegenhaltungen:
- EP-A1- 0 653 900
- DE-A1- 4 324 507
- DE-A1-102010 063 941

## Beschreibung

Die vorliegende Erfindung betrifft ein Gargerät sowie ein Verfahren zum Betreiben eines Gargeräts mit wenigstens einem beheizbaren und durch wenigstens eine Garraumtür verschließbaren Garraum. Das Gargerät umfasst wenigstens eine mit dem Garraum strömungsverbundene Aufbereitungseinrichtung zum Trocknen von Luft aus dem Garraum.
Bei modernen Gargeräten werden immer häufiger ein möglichst emissionsarmer und oft sogar ein emissionsfreier Betrieb gewünscht. Dabei werden der beim Garvorgang entstehende Wrasen und besonders dessen Feuchtigkeit, Fett und geruchsintensive Stoffe als störende Emissionen empfunden. Für einen emissionsfreien Betrieb wird also eine Abluft gewünscht, bei der diese Bestandteile nicht oder nur in vernachlässigbaren Mengen vorhanden sind. Allerdings entstehen bei Garvorgängen fast immer solche Emissionen und müssen daher aus der Abluft aufwendig entfernt oder zumindest reduziert werden. Dazu werden oft Katalysatoren eingesetzt, die Fett und Gerüche im Wrasen abbauen.
Zur Reduzierung der Feuchtigkeit in der Abluft sind Gargeräte mit einem Kondensator bekannt geworden. Allerdings weist die getrocknete und abgeführte Luft in der Regel noch ein recht hohes Maß an Restfeuchte auf. Daher führen auch solche Gargeräte zu einer unerwünschten Emission an Feuchtigkeit in die Küche, sodass die Raumluftfeuchte ungünstig ansteigt. Für eine stärkere Trocknung der Abluft aus dem Garraum ist jedoch ein sehr hoher Energieaufwand notwendig. Das bringt einen sehr schlechten Einfluss auf die Energieeffizienz des Gargeräts mit sich.
Die DE 43 24 507 A1 beschreibt zum Beispiel ein Gargerät mit einem Kondensator, bei dem die getrocknete Luft nach einem Umluftprinzip wieder in den Garraum zurückgeführt wird. Allerdings hat sich in der Praxis gezeigt, dass ein möglichst vollständig geschlossener Umluftkreislauf nicht ohne erheblichen Aufwand umgesetzt werden kann. Sobald der Luft weniger Feuchte entnommen wird, als von dem Gargut im Garraum nachgeliefert wird, entsteht ein Überdruck im Garraum. Dadurch strömt die feuchte Luft aus dem Gargerät aus und erhöht die Raumluftfeuchte in der Küche. Daher kommt es auch bei solchen Gargeräten zu unerwünschten Feuchte-Emissionen.

Die Dokumente EP 0653900 A1 und DE 102010063941 A1 stellen darüber hinaus einen für die Erfindung relevanten Stand der Technik dar.

Es ist daher die Aufgabe der vorliegenden Erfindung, eine verbesserte und insbesondere energieschonende Möglichkeit zur Reduzierung der Feuchte-Emissionen eines Gargeräts zur Verfügung zu stellen.

Diese Aufgabe wird gelöst durch ein Gargerät mit den Merkmalen des Anspruchs 1 sowie durch ein Verfahren mit den Merkmalen des Anspruchs 15. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Das erfindungsgemäße Gargerät umfasst wenigstens einen beheizbaren Garraum. Der Garraum ist durch wenigstens eine Garraumtür verschließbar. Das Gargerät umfasst wenigstens eine mit dem Garraum strömungsverbundene Aufbereitungseinrichtung zum Trocknen von Luft aus dem Garraum. Dabei ist die Aufbereitungseinrichtung dazu geeignet und ausgebildet, in wenigstens einem ersten Betriebsmodus die Luft auf ein geringeres Maß an Feuchte als in wenigstens einem zweiten Betriebsmodus zu trocknen. Die Aufbereitungseinrichtung ist dazu geeignet und ausgebildet, die im ersten Betriebsmodus getrocknete Luft über wenigstens eine Auslasseinrichtung wenigstens teilweise aus dem Gargerät abzuführen. Die Aufbereitungseinrichtung ist dazu geeignet und ausgebildet, die im zweiten Betriebsmodus getrocknete Luft über wenigstens eine Umlufteinrichtung dem Garraum wieder zuzuführen.

Das erfindungsgemäße Gargerät bietet viele Vorteile. Ein erheblicher Vorteil ist, dass die Aufbereitungseinrichtung zwei unterschiedliche Betriebsmodi umfasst. Das bietet eine besonders vorteilhafte und insbesondere energieschonende Möglichkeit, die Feuchte-Emissionen des Gargeräts erheblich zu reduzieren oder sogar zu vermeiden. Dabei bietet der erste Betriebsmodus den Vorteil einer besonders wirksamen Entfeuchtung, da die Luft auf ein geringeres Maß an Feuchte als im zweiten Betriebsmodus getrocknet wird. Dadurch kann die Luft aus dem Garraum in die Umgebung des Gargeräts abgeführt werden, ohne dass die Raumluftfeuchte ungünstig beeinflusst wird. Durch den ersten Betriebsmodus kommt es auch dann nicht zu unerwünschten Feuchte-Emissionen, wenn im Garraum ein Überdruck entsteht bzw. wenn der Luft im Garraum weniger Feuchte entnommen wird, als von dem Gargut nachgeliefert wird.

Ein besonderer Vorteil des zweiten Betriebsmodus ist, dass die getrocknete Luft wieder in den Garraum zurückgeführt wird. Dadurch kann ein besonders wirtschaftlicher und energiesparender Trocknungsaufwand betrieben werden. Da die Luft das Gargerät nicht verlässt, kann auf eine energieintensive Trocknung verzichtet werden, ohne dass es zu unerwünschten Emissionen in der Umgebung des Gargeräts kommt. Der zweite Betriebsmodus benötigt somit erheblich weniger Energie als der erste Betriebsmodus. Durch die beiden unterschiedlichen Betriebsmodi kann der Gesamtenergieverbrauch somit sehr positiv beeinflusst werden. Durch die Entfeuchtung des Garraums lassen sich zudem besonders schmackhafte und z. B. knusprige Garergebnisse erzielen.

Vorzugsweise ist die Aufbereitungseinrichtung dazu geeignet und ausgebildet, in dem ersten Betriebsmodus die Luft auf eine Raumluftfeuchte zu trocknen. Die Raumluftfeuchte entspricht insbesondere einer relativen Luftfeuchtigkeit von weniger als 70 % und vorzugsweise weniger als 60 % und besonders bevorzugt weniger als 50 % insbesondere bei einer Raumtemperatur. Die Raumtemperatur liegt insbesondere bei 20 °C. Es kann auch eine Raumtemperatur von 25 °C angenommen werden. Durch das Trocknen auf eine Raumluftfeuchte werden unerwünschte Feuchte-Emissionen in die Umgebung des Gargeräts wirkungsvoll vermieden. Dadurch wird auch bei längeren Garvorgängen und zum Beispiel bei der Zubereitung von größeren Bratenstücken in einem Backofen die Raumluftfeuchte der Küche nicht ungünstig erhöht.

Insbesondere ist die Aufbereitungseinrichtung dazu geeignet und ausgebildet, in dem ersten Betriebsmodus die Luft auf eine Feuchte nicht wesentlich oberhalb einer Raumluftfeuchte zu trocknen. Insbesondere ist die Aufbereitungseinrichtung dazu geeignet und ausgebildet, in dem ersten Betriebsmodus die Luft auf eine Feuchte zu trocknen, welche nicht mehr als 30 Prozentpunkte und vorzugsweise nicht mehr als 20 Prozentpunkte und besonders bevorzugt nicht mehr als zehn Prozentpunkte oberhalb der relativen Raumluftfeuchte liegt. Möglich ist auch, dass die Aufbereitungseinrichtung dazu geeignet und ausgebildet ist, in dem ersten Betriebsmodus die Luft auf eine Feuchte unterhalb einer Raumluftfeuchte und zum Beispiel auf eine relative Luftfeuchtigkeit von weniger als 50 % bei Raumtemperatur zu trocknen.

Es ist bevorzugt, dass die Aufbereitungseinrichtung mit wenigstens einer Sensoreinrichtung zur Überwachung einer Raumluftfeuchte wirkverbunden ist. Insbesondere ist die Aufbereitungseinrichtung dazu geeignet und ausgebildet, in Abhängigkeit einer sensorisch erfassten Raumluftfeuchte wenigstens ein Maß für eine Restfeuchte festzulegen, welche die in dem ersten Betriebsmodus getrocknete Luft nach dem Trocknen aufweisen soll. Insbesondere ist die Aufbereitungseinrichtung dazu geeignet und ausgebildet, die Luft wenigstens näherungsweise auf dieses Maß für die Restfeuchte zu trocknen. Dadurch kann die Trocknungsleistung an die jeweilige Raumluftfeuchte angepasst werden und ein Auskondensieren der abgeführten Luft in der Umgebung des Gargeräts wird zuverlässig vermieden. Dadurch ist auch ein besonders energiesparender Betrieb möglich.

Die Trocknungsleistung ist insbesondere über einen Volumenstrom und/oder Massenstrom und/oder eine Temperatur eines Kühlmediums, beispielsweise für einen Wärmetauscher bzw. Kondensator, einstellbar. Die Trocknungsleistung kann auch über eine Kühlleistung einer Kältemaschine und/oder über eine Leistung einer Wärmepumpeneinrichtung einstellbar sein. Möglich ist auch, dass die Trocknungsleistung über die Leistung einer thermoelektrischen Kühleinrichtung einstellbar ist. Es können auch andere geeignete Parameter für den Betrieb einer Trocknereinheit zur Trocknung von Luft herangezogen werden, um die Einstellung der Trocknungsleistung vorzunehmen.

Die Aufbereitungseinrichtung umfasst insbesondere wenigstens eine Sensoreinrichtung zur Überwachung der Restfeuchte der in dem ersten und/oder zweiten Betriebsmodus getrockneten Luft. Die Aufbereitungseinrichtung ist insbesondere dazu geeignet und ausgebildet, mittels der Sensoreinrichtung wenigstens eine charakteristische Größe für die Feuchte der zu trocknenden Luft und/oder der getrockneten Luft zu erfassen. Die Aufbereitungseinrichtung ist insbesondere dazu geeignet ausgebildet, wenigstens eine Trocknereinheit in Abhängigkeit der erfassten Größe für die Feuchte der zu trocknenden Luft und/oder der getrockneten Luft anzusteuern und vorzugsweise zu regeln. So kann die Trocknungsleistung erhöht werden, wenn die zu trocknende Luft besonders feucht oder die getrocknete Luft noch eine zu hohe Restfeuchte aufweist. Dadurch ist ein besonders energieschonender Betrieb möglich. Es ist möglich, dass die Sensoreinrichtung zur Überwachung der Raumluftfeuchte und die Sensoreinrichtung zur Erfassung der Feuchte der zu trocknenden Luft und/oder der getrockneten Luft durch eine gemeinsame Sensoreinrichtung mit wenigstens einem und vorzugsweise einer Mehrzahl von Sensoren bereitgestellt wird. Die Sensoreinrichtung kann dazu auch wenigstens einen Sensor zur Erfassung einer Garraumfeuchte aufweisen. Die Garraumfeuchte bietet eine besonders gute Möglichkeit, die Feuchte der zu trocknenden Luft zu erfassen.

Die Aufbereitungseinrichtung kann dazu geeignet und ausgebildet sein, in dem ersten Betriebsmodus die Luft zu kühlen und insbesondere auf eine Temperatur unterhalb einer Raumtemperatur zu kühlen. Insbesondere ist die Aufbereitungseinrichtung dazu geeignet und ausgebildet, in dem ersten Betriebsmodus die Luft unterhalb 20 °C und vorzugsweise unterhalb 15 °C und besonders bevorzugt unterhalb 10 °C zu kühlen. Möglich ist auch, dass die Aufbereitungseinrichtung dazu geeignet ausgebildet ist, in dem ersten Betriebsmodus die Luft unterhalb 5 °C zu kühlen. Die Aufbereitungseinrichtung kann beispielsweise zur Kühlung eines Wärmetauschers ausgebildet sein, durch welchen die Luft zum Trocknen geführt wird. Insbesondere umfasst die Aufbereitungseinrichtung wenigstens eine Kältemaschine und/oder wenigstens eine Wärmepumpeneinrichtung und/oder wenigstens eine thermoelektrische Kühleinrichtung, z. B. ein Peltierelement. Durch eine solche Kühlung kann die Luft auf ein besonders geringes Maß an Feuchte getrocknet werden.

In einer besonders bevorzugten Ausgestaltung ist die Aufbereitungseinrichtung mit wenigstens einer Sensoreinrichtung zur Überwachung der Garraumfeuchte wirkverbunden. Die Aufbereitungseinrichtung ist insbesondere dazu geeignet und ausgebildet, die Luft in dem ersten Betriebsmodus zu trocknen, wenn die erfasste Garraumfeuchte über die Zeit zunimmt. Dadurch kann besonders wirkungsvoll vermieden werden, dass es bei einer Zunahme der Garraumfeuchte zu einem unerwünschten Austreten von feuchter Luft aus dem Gargerät kommt. Insbesondere ist die Aufbereitungseinrichtung dazu geeignet und ausgebildet, die Luft nur dann in dem ersten Betriebsmodus zu trocknen, wenn die Garraumfeuchte über die Zeit zunimmt oder bis auf ihren Zielwert zunehmen soll. Dadurch kann besonders gut Energie eingespart werden. Eine Zunahme und/oder Abnahme der Garraumfeuchte über die Zeit werden insbesondere durch wenigstens einen in der Aufbereitungseinrichtung hinterlegten Schwellenwert für eine zeitliche Änderungsrate oder das Erreichen eines Zielwertes definiert. Die Garraumfeuchte kann zum Beispiel durch eine vom Gargut abgegebene Feuchtigkeit oder die Beschwadung mit einer Verdampfereinheit über die Zeit zunehmen.

Vorzugsweise ist die Aufbereitungseinrichtung dazu geeignet und ausgebildet, die Luft wenigstens dann in dem zweiten Betriebsmodus zu trocknen, wenn die erfasste Garraumfeuchte über die Zeit abnimmt oder abnehmen soll und/oder im Wesentlichen unverändert und insbesondere unverändert bleibt oder bleiben soll. Bei einer abnehmenden oder konstanten Garraumfeuchte kommt es in der Regel zu keinem Überdruck im Garraum und somit zu keinem nennenswerten Austritt von Feuchtigkeit aus dem Gargerät. Steigt die Garraumfeuchte, obwohl ihr augenblicklicher Zielwert im Prozess erreicht ist, weil Feuchte aus dem Gargut verdampft, wird diese zusätzliche Feuchte in der Aufbereitungseinheit als Flüssigkeit auskondensiert und ist damit als Gas nicht mehr vorhanden, das zu einem Überdruck im Garraum geführt hätte. Es ist nur eine Trocknung auf den Zielwert für die Garraumluftfeuchte erforderlich. Der Anspruch dafür ist viel geringer als für das Erreichen von Raumluftfeuchte. Daher kann auf die Abfuhr und die damit verbundene stärkere Trocknung der Luft verzichtet werden.

In einer vorteilhaften Ausgestaltung umfasst das Gargerät wenigstens eine Klimaeinrichtung zur Anpassung einer Garraumfeuchte während eines Garvorgangs insbesondere auf wenigstens einen Zielwert. Die Aufbereitungseinrichtung ist insbesondere dazu geeignet und ausgebildet, die Luft in dem ersten Betriebsmodus zu trocknen und abzuführen, wenn die Garraumfeuchte durch die Klimaeinrichtung auf den Zielwert erhöht wird. Da bei einer Erhöhung der Garraumfeuchte in der Regel ein Überdruck im Garraum auftritt, kann durch eine solche Ausgestaltung dem Austritt von Feuchtigkeit aus dem Gargerät wirkungsvoll entgegengewirkt werden.

Die Klimaeinrichtung ist insbesondere mit wenigstens einer Sensoreinrichtung zur sensorischen Überwachung der Garraumfeuchte wirkverbunden. Die Klimaeinrichtung ist insbesondere dazu geeignet und ausgebildet, mittels wenigstens einer Befeuchtungseinrichtung die Feuchte im Garraum auf den Zielwert zu erhöhen. Die Befeuchtungseinrichtung kann beispielsweise zur Erzeugung von Wasserdampf ausgebildet sein. Die Klimaeinrichtung kann auch dazu geeignet und ausgebildet sein, die Trocknungsleistung der Aufbereitungseinrichtung wenigstens zeitweise so zu reduzieren, dass die Garraumfeuchte durch eine von einem Gargut abgegebene Feuchtigkeit auf den Zielwert erhöht wird.

Die Klimaeinrichtung ist insbesondere dazu geeignet und ausgebildet, mittels der Aufbereitungseinrichtung die Garraumfeuchte auf wenigstens einen Zielwert zu verringern und/oder zu halten. Beispielsweise ist eine Verringerung der Garraumfeuchte bei der Zubereitung von knusprigen Backwaren, Braten oder Pommes frites von Vorteil. Die Aufbereitungseinrichtung ist insbesondere dazu geeignet und ausgebildet, die Luft in dem zweiten Betriebsmodus zu trocknen, wenn die Garraumfeuchte verringert und/oder gehalten werden soll. Da in diesen Situationen in der Regel kein Überdruck im Garraum auftritt und somit auch keine unerwünschte Feuchtigkeit in die Umgebung abgegeben wird, bietet der zweite Betriebsmodus hier eine besonders energieschonende Möglichkeit zum Erreichen des Zielwerts.

Bevorzugt ist die Aufbereitungseinrichtung dazu geeignet und ausgebildet, den Betriebsmodus durch wenigstens eine Vorgabe wenigstens eines Garprogramms auszuwählen. Insbesondere ist die Klimaeinrichtung dazu geeignet und ausgebildet, mittels der Aufbereitungseinrichtung die Garraumfeuchte auf wenigstens einen in einem Garprogramm hinterlegten Zielwert einzustellen. Das hat den Vorteil, dass je nach Garprogramm eine bestimmte Garraumfeuchte und zum Beispiel ein zeitgesteuertes Feuchteprofil umgesetzt werden können.

Ist in dem Garprogramm beispielsweise eine Erhöhung der Garraumfeuchte vorgesehen, zum Beispiel mittels der Klimaeinrichtung, so kann daran ein Betrieb der Aufbereitungseinrichtung in dem ersten Betriebsmodus gekoppelt sein. So wird gewährleistet, dass bei einer Zunahme der Garraumfeuchte ein unerwünschtes Austreten von Feuchtigkeit vermieden wird bzw. nur ausreichend getrocknete Luft abgeführt wird. Ist in dem Garprogramm hingegen vorgesehen, dass die Garraumfeuchte reduziert oder gehalten werden soll, ist dies vorzugsweise mit einem Betrieb der Aufbereitungseinrichtung in dem zweiten Betriebsmodus gekoppelt. So kann Energie eingespart werden.

Besonders bevorzugt umfasst die Aufbereitungseinrichtung für jeden Betriebsmodus jeweils wenigstens eine Trocknereinheit. Die Trocknereinheit ist insbesondere dazu geeignet und ausgebildet, die Luft aus dem Garraum auf ein entsprechendes Maß zu trocknen. Vorzugsweise umfasst die Aufbereitungseinrichtung wenigstens zwei Trocknereinheiten. Insbesondere ist die Aufbereitungseinrichtung dazu geeignet und ausgebildet, in den ersten Betriebsmodus die Luft mit wenigstens einer ersten Trocknereinheit zu trocknen und in dem zweiten Betriebsmodus die Luft mit wenigstens einer zweiten Trocknereinheit zu trocknen. Das bietet eine besonders wirtschaftliche und konstruktiv unaufwendige Möglichkeit, den ersten und den zweiten Betriebsmodus umzusetzen. Für den ersten Betriebsmodus und/oder zweiten Betriebsmodus können auch wenigstens zwei Trocknereinheiten vorgesehen sein. Insbesondere ist wenigstens eine Trocknereinheit sowohl für den zweiten als auch für den ersten Betriebsmodus einsetzbar. Beispielsweise kann die zweite Trocknereinheit für den zweiten Betriebsmodus wenigstens zeitweise auch im ersten Betriebsmodus aktiv sein, um die Luft vorzutrocknen, bevor sie der Trocknereinheit für den ersten Betriebsmodus bzw. der ersten Trocknereinheit zugeführt wird.

Möglich ist auch, dass die Aufbereitungseinrichtung nur eine Trocknereinheit umfasst. Die Trocknereinheit ist dann insbesondere in wenigstens zwei Leistungsstufen betreibbar. Dabei ist insbesondere für jeden Betriebsmodus jeweils wenigstens eine Leistungsstufe vorgesehen.

Die Trocknereinheiten sind insbesondere in Reihe geschaltet. Insbesondere ist die Trocknereinheit für den zweiten Betriebsmodus in Strömungsrichtung vor die Trocknereinheit für den ersten Betriebsmodus geschaltet. Das hat den Vorteil, dass der Trocknereinheit für den ersten Betriebsmodus bereits vorgetrocknete Luft zugeführt werden kann. Insbesondere sind die Trocknereinheiten miteinander strömungsverbunden. Insbesondere ist wenigstens einer Trocknereinheit wenigstens eine Gebläseeinrichtung vorgeschaltet und/oder nachgeschaltet.

Insbesondere ist der Trocknereinheit für den zweiten Betriebsmodus wenigstens ein Mehrwegeventil nachgeschaltet. Das Mehrwegeventil umfasst insbesondere wenigstens einen ersten Strömungsweg zum Einleiten der Luft in den Garraum. Das Mehrwegeventil umfasst insbesondere wenigstens einen zweiten Strömungsweg zu der Trocknereinheit für den ersten Betriebsmodus. Ein solches Mehrwegeventil bietet eine unaufwendige und zuverlässige Möglichkeit, zwischen dem ersten und dem zweiten Betriebsmodus zu schalten. So kann über das Mehrwegeventil die im zweiten Betriebsmodus getrocknete Luft entweder wieder in den Garraum oder zur weiteren Trocknung der Trocknereinheit für den ersten Betriebsmodus zugeführt und dann anschließend aus dem Gargerät abgeführt werden. Das Mehrwegeventil ist insbesondere zwischen dem ersten und zweiten Strömungsweg schaltbar. Es können auch weitere Strömungswege vorgesehen und schaltbar sein. Das Mehrwegeventil ist beispielsweise als ein Dreiwegeventil ausgeführt.

Die Trocknereinheit für den ersten Betriebsmodus ist vorzugsweise über die Trocknereinheit mit dem zweiten Betriebsmodus mit dem Garraum strömungsverbunden. In einer solchen Ausgestaltung wird die Luft vorzugsweise zunächst in die Trocknereinheit für den zweiten Betriebsmodus geführt, bevor sie der Trocknereinheit für den ersten Betriebsmodus zugeführt wird. Die Trocknereinheit für den zweiten Betriebsmodus kann bezüglich der Lufttrocknung aktiv oder auch inaktiv sein, wenn die Luft für den ersten Betriebsmodus hindurchgeführt wird. Insbesondere ist für beide Trocknereinheiten eine gemeinsame Garraumöffnung vorgesehen.

Die Trocknereinheit für den ersten Betriebsmodus kann auch unmittelbar mit dem Garraum strömungsverbunden sein. Insbesondere weist die Trocknereinheit für den ersten Betriebsmodus wenigstens einen separaten Strömungsweg auf, der die Trocknereinheit an den Garraum anbindet. Insbesondere ist auch die Trocknereinheit für den zweiten Betriebsmodus über einen separaten Strömungsweg unmittelbar mit dem Garraum strömungsverbunden. Der Strömungsweg ist vorzugsweise durch wenigstens ein Ventil und/oder eine Klappe öffenbar und/oder schließbar. Insbesondere ist für jede Trocknereinheit wenigstens jeweils eine Garraumöffnung vorgesehen.

Es ist möglich, dass die Trocknereinheit für den ersten Betriebsmodus und die Trocknereinheit für den zweiten Betriebsmodus zeitgleich betreibbar sind. Vorzugsweise ist ein unabhängiger Betrieb der Trocknereinheiten vorgesehen. Die Trocknereinheiten können auch nur im Wechsel betreibbar sein.

Die Trocknereinheit für den ersten Betriebsmodus ist insbesondere mittels wenigstens einer thermoelektrischen Kühleinrichtung und/oder mittels wenigstens einer Wärmepumpeneinrichtung aktiv kühlbar. Die Trocknereinheit für den ersten Betriebsmodus kann auch mittels wenigstens einer Kältemaschine aktiv kühlbar sein. Dadurch kann eine besonders gute Trocknungsleistung erreicht werden.

Die Trocknereinheit für den zweiten Betriebsmodus umfasst vorzugsweise wenigstens einen luftgekühlten Wärmetauscher. Das bietet eine besonders energiesparende und zugleich sehr wirksame Feuchtereduzierung im zweiten Betriebsmodus. Möglich ist auch, dass die Trocknereinheit für den zweiten Betriebsmodus wenigstens einen flüssigkeitsgekühlten Wärmetauscher oder wenigstens einen passivgekühlten Wärmetauscher umfasst. Die Trocknereinheit für den zweiten Betriebsmodus kann aber auch wenigstens teilweise aktiv kühlbar sein.

Das erfindungsgemäße Verfahren dient zum Betreiben eines Gargerätes mit wenigstens einem beheizbaren und durch wenigstens eine Garraumtür verschließbaren Garraum. Das Gargerät umfasst wenigstens eine mit dem Garraum strömungsverbundene Aufbereitungseinrichtung. Mit der Aufbereitungseinrichtung wird Luft aus dem Garraum getrocknet. Dabei wird die Luft mittels der Aufbereitungseinrichtung in wenigstens einem ersten Betriebsmodus auf ein geringeres Maß an Feuchte als in wenigstens einem zweiten Betriebsmodus getrockneten. Die in dem ersten Betriebsmodus getrocknete Luft wird über wenigstens eine Auslasseinrichtung wenigstens teilweise aus dem Gargerät abgeführt und vorzugsweise vollständig aus dem Gargerät abgeführt. Die in dem zweiten Betriebsmodus getrocknete Luft wird über wenigstens eine Umlufteinrichtung dem Garraum wieder zugeführt.

Das erfindungsgemäße Verfahren ermöglicht einen Garbetrieb ohne oder mit erheblich reduzierten Feuchte-Emissionen und bietet dabei eine besonders energieschonende Lufttrocknung. Vorzugsweise ist das zuvor beschriebene Gargerät nach dem erfindungsgemäßen Verfahren betreibbar.

Die Aufbereitungseinrichtung ist insbesondere in wenigstens zwei unterschiedlichen Betriebsmodi betreibbar. Insbesondere ist die Aufbereitungseinrichtung in dem ersten und zweiten Betriebsmodus betreibbar. Die Aufbereitungseinrichtung umfasst insbesondere wenigstens eine Gebläseeinrichtung zum Fördern der Luft aus dem Garraum und/oder der getrockneten Luft. Insbesondere ist der Umlufteinrichtung, die die Garraumluft im Betriebsmodus 12 über die Trocknereinheit und dann wieder zurück in den Garraum führt, und/oder der Auslasseinrichtung wenigstens eine Gebläseeinrichtung zugeordnet. Insbesondere ist wenigstens einer Trocknereinheit wenigstens eine Gebläseeinrichtung vorgeschaltet und/oder nachgeschaltet.

Die Aufbereitungseinrichtung kann wenigstens eine Reinigungseinheit zur Reinigung der Luft umfassen. Die Reinigungseinheit ist insbesondere dazu geeignet und ausgebildet, hydrophobe Bestandteile und/oder geruchsintensive Stoffe des Wrasens zu reduzieren oder zu entfernen. Insbesondere umfasst die Reinigungseinheit wenigstens eine Katalysatoreinrichtung. Die Reinigungseinheit kann auch wenigstens eine Wascheinrichtung mit wenigstens einer Waschflüssigkeit umfassen. Die Wascheinrichtung ist insbesondere dazu geeignet und ausgebildet, hydrophobe Bestandteile und/oder geruchsintensive Stoffe und/oder Feuchtigkeit des Wrasens mittels der Waschflüssigkeit aufzunehmen und zum Beispiel zu kondensieren. Die Reinigungseinheit kann auch wenigstens teilweise in der Trockeneinheit integriert sein. Beispielsweise kann in der Trockeneinheit eine Waschflüssigkeit vorgesehen sein, welche sowohl zum Kondensieren der Feuchte als auch zum Kondensieren bzw. Waschen der hydrophoben Bestandteile des Wrasens ausgebildet ist.

Das erfindungsgemäße Gargerät ist vorzugsweise dazu geeignet und ausgebildet, nach dem hier vorgestellten Verfahren betrieben zu werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines erfindungsgemäßen Gargeräts in einer Seitenansicht;
- Figur 2: eine rein schematische Darstellung einer Ausgestaltung des Gargeräts;
- Figur 3: eine rein schematische Darstellung einer anderen Ausgestaltung des Gargeräts;
- Figur 4: eine rein schematische Darstellung einer Weiterbildung des Gargeräts; und
- Figur 5: eine Skizze eines Garverlaufs in einer rein schematischen Darstellung.

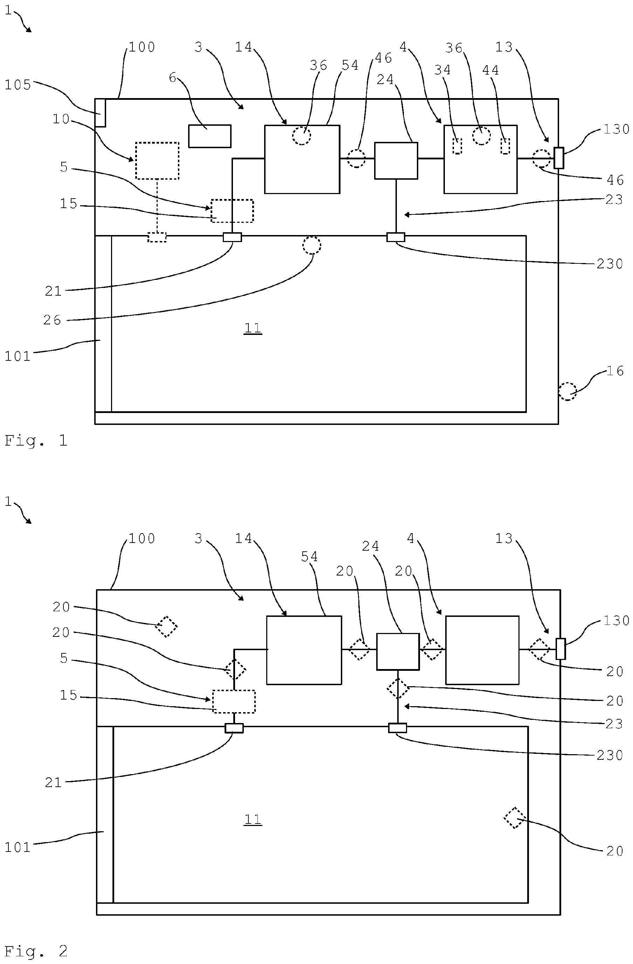

Die Figur 1 zeigt ein erfindungsgemäßes Gargerät 1, welches hier als ein Backofen 100 ausgeführt ist. Das Gargerät wird nach dem erfindungsgemäßen Verfahren betrieben. Das Gargerät 1 ist hier als ein Einbaugerät vorgesehen. Möglich ist auch, dass das Gargerät 1 als ein Herd bzw. Standgerät ausgebildet ist. Das Gargerät 1 hat einen beheizbaren Garraum 11, welcher durch eine Garraumtür 101 verschließbar ist.

Für die Beheizung des Garraums 11 stehen verschiedene Heizeinrichtungen zur Verfügung. Möglich ist unter anderem das Beheizen mit einer Ober- und/oder Unterhitze, mit einer Umluftfunktion, mit einer Heißluftheizquelle und/oder mit einer Grillfunktion. Möglich ist auch, dass das Gargerät 1 als ein Kombigerät mit einer Mikrowellenfunktion und/oder einer Dampfgarfunktion ausgebildet ist.

Das Gargerät 1 umfasst hier eine Steuereinrichtung zur Steuerung bzw. Regelung von Gerätefunktionen und Betriebszuständen. Über die Steuereinrichtung sind hier verschiedene Betriebsarten und vorzugsweise verschiedene Garprogramme bzw. Programmbetriebsarten und andere Automatikfunktionen ausführbar.

Zur Bedienung des Gargerätes 1 ist eine Bedieneinrichtung 105 vorgesehen. Beispielsweise können darüber die Betriebsart, die Garraumtemperatur und/oder ein Garprogramm bzw. eine Programmbetriebsart oder andere Automatikfunktion ausgewählt und eingestellt werden. Die Bedieneinrichtung 105 umfasst auch eine Anzeige, über die Benutzerhinweise und z. B. Eingabeaufforderungen angezeigt werden können.

Das Gargerät 1 umfasst eine Aufbereitungseinrichtung 3 zum Trocknen von Luft aus dem Garraum 11, welche hier in zwei unterschiedlichen Betriebsmodi betreibbar ist. In dem ersten Betriebsmodus wird die Luft auf ein geringeres Maß an Feuchte als in einem zweiten Betriebsmodus getrocknet und somit stärker entfeuchtet.

Unter der Luft aus dem Garraum wird hier insbesondere ein Wrasen bzw. wrasenhaltige Luft verstanden. Der Wrasen enthält zum Beispiel einen entsprechend hohen Anteil an Wasserdampf sowie an auskondensiertem Wasserdampf bzw. Dampfschwaden. Zudem enthält der Wrasen auch Fette bzw. Öle und andere Stoffe, welche während des Garvorgangs aus dem Lebensmittel austreten bzw. von dem Lebensmittel gebildet werden.

Die zu trocknende Luft wird über einen Garraumauslass 21 aus dem Garraum entnommen. Die im ersten Betriebsmodus 2 getrocknete Luft wird über eine Auslasseinrichtung 13 mit einer Auslassöffnung 130 aus dem Gargerät 1 abgeführt. Die im zweiten Betriebsmodus getrocknete Luft wird über eine Umlufteinrichtung 23 mit einer Einlassöffnung 230 wieder in den Garraum 11 zurückgeleitet.

Die Aufbereitungseinrichtung 3 umfasst hier zwei in Reihe geschaltete Trocknereinheiten 4, 14. Dabei wird die Luft im ersten Betriebsmodus mit einer ersten Trocknereinheit 4 und im zweiten Betriebsmodus mit einer zweiten Trocknereinheit 14 getrocknet. Wenn die erste Trocknereinheit 4 aktiv ist, kann die zweite Trocknereinheit 14 inaktiv sein oder zur Trocknung der Luft eingesetzt werden. Die zweite Trocknereinheit 14 kann z. B. wenigstens zeitweise im ersten Betriebsmodus eingesetzt werden, z. B. um die Luft vorzutrocknen.

Die zweite Trocknereinheit 14 ist hier der ersten Trocknereinheit 4 in Strömungsrichtung vorgeschaltet. Die Trocknereinheit 14 kann über den Garraumauslass 21 Luft aus dem Garraum 11 aufnehmen, trocknen und über die Umlufteinrichtung 23 wieder dem Garraum 11 zuführen.

Die erste Trocknereinheit 4 ist der zweiten Trocknereinheit 14 nachgeschaltet und über die Trocknereinheit 14 und den Garraumauslass 21 mit dem Garraum 11 strömungsverbunden. Die mit der ersten Trocknereinheit 4 getrocknete Luft wird über die Auslasseinrichtung 13 in die Umgebung des Gargeräts 1 abgeführt, z. B. in einen Küchenraum.

Zwischen den beiden Trocknereinheiten 4, 14 ist hier ein Mehrwegeventil 24 angeordnet. Je nach Ventilstellung kann die Luft nach dem Austritt aus der zweiten Trocknereinheit 14 in den Garraum 11 zurückgeführt werden oder zu der ersten Trocknereinheit 4 strömen. Es können auch Zwischenstellungen vorgesehen sein. Das Mehrwegeventil 24 ist zum Beispiel als ein Dreiwegeventil ausgebildet.

Die zweite Trocknereinheit 14 ist hier mit einem Wärmetauscher 54 ausgestattet, welcher vorzugsweise mit Luft gekühlt wird. Wenn die aus dem Garraum 11 entnommene Luft durch den Wärmetauscher 54 strömt, kondensiert wenigstens ein Teil der enthaltenen Feuchtigkeit.

Für das Kondensat kann ein Sammelbehälter und/oder eine Abführeinrichtung vorgesehen sein. Die Abführeinrichtung kann beispielsweise an ein Abwassersystem angeschlossen sein.

Die erste Trocknereinheit 4 kann mit einer thermoelektrischen Kühleinrichtung 34 ausgestattet sein. Zusätzlich oder alternativ kann die erste Trocknereinheit 4 auch eine Wärmepumpeneinrichtung 44 umfassen. Die Trocknereinheit 4 kann eine Kältemaschine, beispielsweise mit einem Kompressor, umfassen. Durch das Abkühlen der Luft kann ein besonders hohes Maß an Feuchtigkeit kondensiert werden, sodass eine entsprechend hohe Trocknungsleistung erreicht wird. Auch das Kondensat der ersten Trocknereinheit 4 kann einem Sammelbehälter und/oder einer Abführeinrichtung zugeführt werden.

Die erste Trocknereinheit 4 ist hier dazu geeignet und ausgebildet, die Luft auf eine Raumluftfeuchte oder auf eine Feuchte nicht wesentlich oberhalb einer Raumluftfeuchte zu trocknen. Dadurch kann die getrocknete Luft in die Umgebung des Gargeräts 1 abgeführt werden, ohne dass es zu unerwünschten Feuchte-Emissionen bzw. zu einer Erhöhung der Raumluftfeuchte kommt.

In einer anderen Ausgestaltung kann die Aufbereitungseinrichtung 3 auch nur eine Trocknereinheit umfassen, welche in den unterschiedlichen Betriebsmodi betreibbar ist. Beispielsweise können dazu zwei oder mehr Leistungsstufen bzw. Trocknungsstufen vorgesehen sein. Je nach Trocknungsstufe kann die zu trocknende Luft zum Beispiel stärker bzw. schwächer gekühlt werden.

Wahlweise kann die Aufbereitungseinrichtung 3 auch mit einer Reinigungseinheit 5 ausgestattet sein. Die Reinigungseinheit 5 umfasst zum Beispiel eine Katalysatoreinrichtung 15, welche Reaktionen zum Abbau von Fetten und/oder Ölen sowie von geruchsbelästigenden Stoffen des Wrasens katalysiert bzw. unterstützt. Die Reinigungseinheit 5 kann auch mit einer Wascheinrichtung mit einer Waschflüssigkeit ausgestattet sein, in welcher die unerwünschten Bestandteile des Wrasens aufgenommen bzw. gebunden werden. Die Reinigungseinheit 5 kann auch mit anderen geeigneten Komponenten zur Reinigung von Luft bzw. des Wrasens ausgestattet sein.

Die Reinigungseinheit 5 ist hier in Strömungsrichtung vor den Komponenten der Lufttrocknung und insbesondere vor den Trocknereinheiten 4, 14 angeordnet. So werden schwer zu entfernende Verschmutzungen in den Trocknereinheiten 4, 14 bzw. stromabwärts der Reinigungseinheit 5 wirkungsvoll vermieden. Die Reinigungseinheit 5 kann aber auch an anderen Positionen entlang der entsprechenden Strömungswege vorgesehen sein.

Das Gargerät 1 kann in einer Ausgestaltung auch eine Klimaeinrichtung 10 umfassen, um die Feuchtigkeit im Garraum 11 während eines Garvorgangs an die zum Garen benötigten Bedingungen anpassen zu können. Die Klimaeinrichtung 10 ist mit dem Garraum 11 strömungsverbunden und kann beispielsweise Wasserdampf erzeugen und in den Garraum 11 einbringen.

Die Aufbereitungseinrichtung 3 ist hier mit einer Sensoreinrichtung 6 wirkverbunden. Dabei kann wenigstens zeitweise ein Sensorsignal zur Steuerung bzw. Regelung der Aufbereitungseinrichtung 3 eingesetzt werden.

Die Sensoreinrichtung 6 kann zum Beispiel einen Sensor 16 zur Überwachung der Raumluftfeuchte umfassen. Der Sensor 16 ist hier an einer Außenseite des Gargeräts 1 angeordnet. Er kann aber auch an einer geeigneten Stelle innerhalb des Gargeräts 1 untergebracht sein. Die Aufbereitungseinrichtung zieht hier die sensorisch erfasste Raumluftfeuchte heran, um ein Maß für die Restfeuchte festzulegen, die die im ersten Betriebsmodus getrocknete Luft nach dem Trocknen aufweisen soll. Dabei stellt die Aufbereitungseinrichtung 3 die Trocknungsleistung der jeweiligen Trocknereinheit 4, 14 so ein, dass die getrocknete Luft eine Restfeuchte nicht wesentlich oberhalb der gemessenen Raumluftfeuchte und vorzugsweise unterhalb der gemessenen Raumluftfeuchte aufweist.

Die Sensoreinrichtung 6 umfasst hier auch einen Sensor 26 zur Überwachung der Garraumfeuchte, welcher z. B. im Garraum 11 angeordnet ist. Die Aufbereitungseinrichtung 3 registriert hier zeitliche Änderungen der sensorisch erfassten Garraumfeuchte. Wenn die erfasste Garraumfeuchte über die Zeit zunimmt, trocknet die Aufbereitungseinrichtung die Luft im ersten Betriebsmodus bzw. mit der ersten Trocknereinheit 4 und entlässt die getrocknete Luft aus dem Gerät 1. So kann der bei einer Zunahme der Garraumfeuchte auftretende Überdruck im Garraum 11 abgebaut werden. Da die abgeführte Luft zuvor entsprechend stark entfeuchtet wurde, kommt es dabei nicht zu unerwünschten Feuchte-Emissionen.

Wenn die Garraumfeuchte über die Zeit abnimmt bzw abnehmen soll oder im Wesentlichen unverändert bleibt bzw bleiben soll, trocknet die Aufbereitungseinrichtung 3 die Luft in dem zweiten Betriebsmodus. Dann ist die erste Trocknereinheit 4 inaktiv und die zweite Trocknereinheit 14 wird im Umluftbetrieb eingesetzt.

Der Sensor 26 kann in einer Ausgestaltung auch von der Klimaeinrichtung 10 herangezogen werden, um die Feuchte im Garraum 11 auf einen Zielwert einzustellen. Je nach Sensorsignal kann die Klimaeinrichtung 10 die Garraumfeuchte beispielsweise durch Wasserdampferzeugung oder durch Reduzierung der Trocknungsleistung der Trocknereinheiten 4, 14 erhöhen. Durch die vom Gargut abgegebene Feuchtigkeit tritt dann eine entsprechende Erhöhung der Garraumfeuchte ein. Entsteht dabei ein Überdruck, wird die Luft mit der ersten Trocknereinheit 4 getrocknet, bevor sie aus dem Gerät 1 abgeführt wird. Die Klimaeinrichtung 10 kann die Garraumfeuchte auch auf einen Zielwert verringern, beispielsweise durch eine Erhöhung der Trocknungsleistung wenigstens einer der beiden Trocknereinheiten 4, 14.

Der Betrieb der Klimaeinrichtung 10 ist mit dem Betrieb der Aufbereitungseinrichtung 3 gekoppelt. Wenn die Klimaeinrichtung 10 die Garraumfeuchte beispielsweise auf einen Zielwert verringert oder hält, wird die Aufbereitungseinrichtung 3 in dem zweiten Betriebsmodus betrieben. In einer solchen Situation kommt es in der Regel nicht zu einem Überdruck im Garraum 11, sodass ein energieschonender Umluftbetrieb mit der zweiten Trocknereinheit 14 besonders vorteilhaft ist.

Wenn die Klimaeinrichtung 10 die Garraumfeuchte auf den Zielwert erhöht, beispielsweise durch Wasserdampfzufuhr, wird die Aufbereitungseinrichtung 3 hingegen in dem ersten Betriebsmodus betrieben. Da die Erhöhung der Garraumfeuchte einen entsprechenden Überdruck mit sich bringt, sind dann eine Abfuhr der Luft und eine entsprechend stärkere Trocknung von besonderem Vorteil.

Für die zuvor beschriebenen Anwendungen kann die Sensoreinrichtung 6 auch weitere Sensoren umfassen. Beispielsweise kann den Trocknereinheiten 4, 14 jeweils wenigstens ein Sensor 36 zugeordnet sein. Den Trocknereinheiten 4, 14 kann auch wenigstens ein Sensor 46 nachgeschaltet sein. Einer der Sensoren 36, 46 kann dabei auch als Sensor für die Garraumfeuchte 26 eingesetzt werden. Es kann z. B. zwischen dem ersten und zweiten Betriebsmodus in Abhängigkeit eines Signals wenigstens eines der Sensoren 16, 26, 36, 46 gewechselt werden. Auch die Trocknungsleistung kann über wenigstens einen dieser Sensoren 16, 26, 36, 46 eingestellt werden.

Die Sensoren 16, 26, 36, 46 können beispielsweise als Feuchtesensoren oder auch als Temperatursensoren, beispielsweise im Rahmen einer Taupunktermittlung, ausgebildet sein. Die Sensoren 16, 26, 36, 46 können auch an anderen als den hier gezeigten Positionen im Gargerät 1 angeordnet sein. Die Sensoreinrichtung 6 auch nur einen bzw. nur einen Teil der hier aufgezeigten Sensoren 16, 26, 36, 46, umfassen.

In der Figur 2 sind verschiedene Möglichkeiten für einen Einsatz einer oder mehrerer Gebläseeinrichtungen 20 gezeigt. Beispielsweise kann die Gebläseeinrichtung 20 der zweiten Trocknereinheit 14 vorgeschaltet und/oder nachgeschaltet sein. Die Gebläseeinrichtung 20 kann auch dem Mehrwegeventil 24 nachgeschaltet sein. Zudem kann die Gebläseeinrichtung 20 der ersten Trocknereinheit 4 vorgeschaltet und/oder nachgeschaltet sein. Es können nur ein Teil der hier gezeigten Gebläseeinrichtungen 20 oder auch alle Gebläseeinrichtungen 20 vorgesehen sein.

In einer Ausgestaltung kann eine im Garraum 11 angeordnete Gebläseeinrichtung 20 zur Förderung der Luft im ersten und/oder zweiten Betriebsmodus ausgebildet sein. Beispielsweise ist die Gebläseeinrichtung 20 dann als ein Umluftgebläse und/oder Heißluftgebläse ausgebildet. Es kann auch eine Gebläseeinrichtung 20 zur Förderung von Kühlluft für elektronische Komponenten des Gargeräts 1 zur Förderung der Luft im ersten und/oder zweiten Betriebsmodus ausgebildet sein.

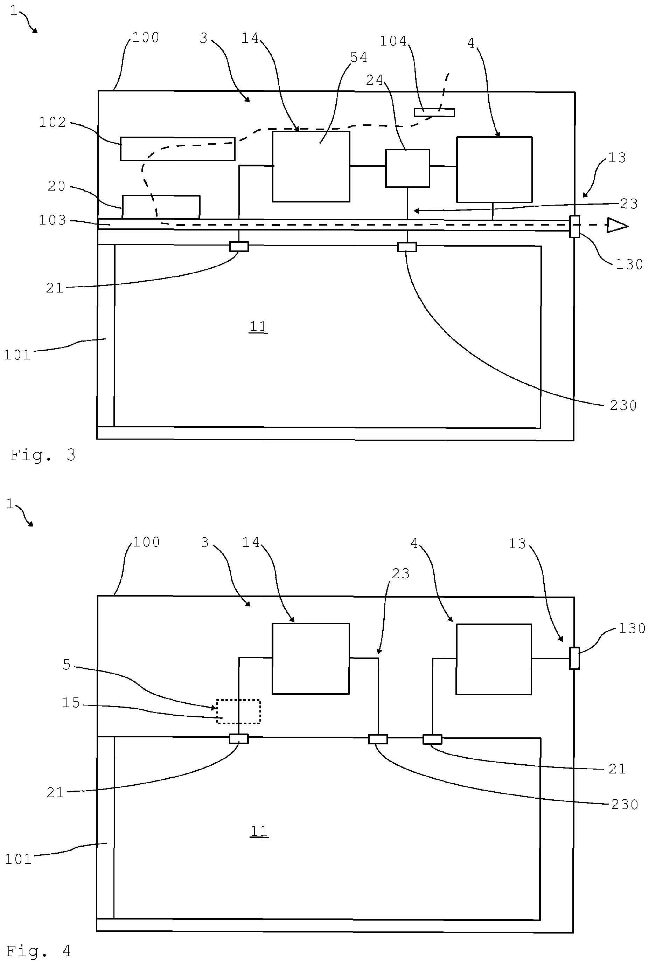

Die Figur 3 zeigt eine Ausgestaltung des Gargeräts 1 mit einer Gebläseeinrichtung 20, welche hier zum Kühlen einer elektronischen Komponente 102 und zum Beispiel einer Elektronikbox dient. Die elektronische Komponente 102 umfasst beispielsweise wenigstens eine Steuereinrichtung und/oder Leistungselektronik. Dabei wird die Gebläseeinrichtung 20 auch zum Kühlen eines luftgekühlten Wärmetauschers 54 der zweiten Trocknereinheit 14 eingesetzt. Ein stark schematisierter Strömungsweg der von der Gebläseeinrichtung 20 geförderten Kühlluft ist hier als eine gestrichelte Linie eingezeichnet.

Die Gebläseeinrichtung 20 saugt hier über einen Kühllufteinlass 104 Luft aus der Umgebung des Gargeräts 1 an. Diese Kühlluft wird entlang des Wärmetauschers 54 geführt. Dann wird die Kühlluft entlang der elektronischen Komponente 102 geführt. Anschließend bläst die Gebläseeinrichtung 20 die Luft in einen Kühlkanal 103, welcher über eine Auslassöffnung 130 in die Umgebung des Gargeräts 1 mündet. Die Auslasseinrichtung 13 zum Abführen der in dem ersten Betriebsmodus getrockneten Luft ist hier ebenfalls mit dem Kühlkanal 100 strömungsverbunden. So kann die mit der Trocknereinheit 4 getrocknete Luft ebenfalls über den Kühlkanal 103 und die Auslassöffnung 130 in die Umgebung abgeführt werden. Zum Fördern der Luft in dem zweiten Betriebsmodus kann der Trocknereinheit 14 eine weitere Gebläseeinrichtung 20 vorgeschaltet und/oder nachgeschaltet sein.

In der Figur 4 ist ein Gargerät 1 gezeigt, bei welchem für jeden Betriebsmodus jeweils ein eigener Strömungskreislauf bereitsteht. Die erste Trocknereinheit 4 ist dabei über einen eigenen Garraumauslass 21 mit dem Garraum 11 strömungsverbunden. Zudem ist ein eigener Garraumauslass 21 für die zweite Trocknereinheit 14 vorgesehen. Die Strömungswege für die beiden Trocknereinheiten 4, 14 können beispielsweise über hier nicht näher dargestellte Ventile und/oder Klappen geöffnet bzw. verschlossen werden. Gebläseeinrichtungen zur Förderung der Luft 20 sind hier nicht eingezeichnet.

In einer Ausgestaltung des hier gezeigten Geräts 1 wird auf eine Gebläseeinrichtung für die erste Trocknereinheit 4 verzichtet, wenn der zweite Betriebsmodus nur bei einem Überdruck im Garraum 11 vorgesehen ist.

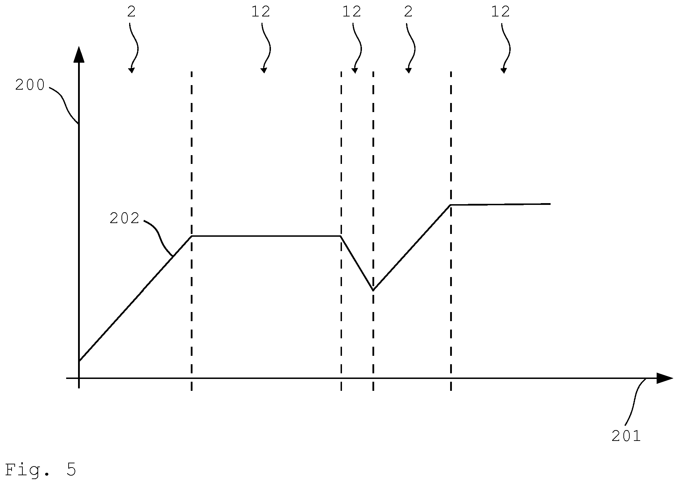

Die Figur 5 zeigt einen sehr stark schematisierten Feuchteverlauf 202 während eines beispielhaften Garvorgangs. Der Garvorgang ist hier durch ein Garprogramm bzw. Automatikprogramm vorgegeben, welches in dem Gargerät 1 hinterlegt ist. Für den Feuchteverlauf 202 wurde hier ein Feuchtemaß 200 und beispielsweise die relative Luftfeuchtigkeit im Garraum 11 gegen die Zeit 201 aufgetragen. Die senkrechten, gestrichelten Linien deuten hier stark schematisch die Übergänge an, bei denen die Garraumfeuchte zunimmt bzw. abnimmt oder gehalten wird. Zudem ist angegeben, ob der erste oder zweite Betriebsmodus aktiv ist.

Zu Beginn des Garvorgangs wird der Garraum 11 aufgeheizt und die Feuchte im Garraum 11 wird mit einer Beschwadungseinheit auf den Zielwert erhöht. Entsprechend steigt das Gasvolumen im Garraum 11 an. Die vorhandene Garraumluft mit zu geringer Feuchte muss gegen die Luft mit hoher Feuchte bzw gegen reine Feuchte aus dem Verdampfer ersetzt werden. Um ein Austreten der Feuchtigkeit aus dem Gargerät 1 zu vermeiden, wird die zu ersetzende Garraumluft mit zu geringer Feuchte vor dem Abführen auf eine entsprechende Restfeuchte und beispielsweise auf eine Raumluftfeuchte getrocknet. Dazu ist der erste Betriebsmodus aktiviert.

Der erste Betriebsmodus 2 ist hier so lange aktiv, bis die gewünschte Garraumfeuchte erreicht ist. Danach wird in den zweiten Betriebsmodus 12 gewechselt. Im zweiten Betriebsmodus 12 wird in dem hier gezeigten Garprogramm die Garraumfeuchte konstant gehalten. Dazu wird die zweite Trocknereinheit 14 eingesetzt und die erste Trocknereinheit 4 ist deaktiviert. Die auf den Zielwert getrocknete Luft wird über die Umlufteinrichtung 23 wieder in den Garraum 11 zurückgeführt. In dieser Phase wird die aus dem Lebensmittel bzw. Gargut kommende Feuchtigkeit kondensiert und tritt nicht als ein zusätzliches Gas in Erscheinung, sodass es zu keinem Überdruck und keiner Veränderung der Feuchte im Garraum kommt. Dazu ist der zweite Betriebsmodus 12 hier so eingestellt, dass eine konstante Garraumfeuchte eingehalten wird. Somit wird im Wesentlichen die gesamte aus dem Gargut stammende Feuchte aus der Garraumluft entfernt bzw. kondensiert.

In dem hier gezeigten Beispiel schließt sich dann eine Phase mit sinkender Garraumfeuchte an. Das kann beispielsweise dann der Fall sein, wenn die im Gargut vorhandene Feuchte bereits zu einem großen Teil verdampft ist oder wenn die Zielwerte des Feuchteverlaufs so gewollt sind, zB für die Zubereitung von knusprigen Backwaren oder Braten. Damit die Garraumfeuchte sinken kann, muss die Trocknung in dieser Phase im zweiten Betriebsmodus 12 verstärkt werden, aber immer noch lange nicht so stark wie bei einer Trocknung auf Raumluftniveau, sondern nur auf ein Niveau zum optimalen Garen.

Wenn die Garraumfeuchte zu stark bzw. unterhalb einer im Garprogramm hinterlegten Zielfeuchte absinkt, kann eine Erhöhung der Garraumfeuchte vorgesehen sein. Dazu wird über die Klimaeinrichtung 10 beispielsweise Wasserdampf in den Garraum 11 eingebracht. Durch ein gezieltes Anheben der Garraumfeuchte kann ein Austrocknen des Lebensmittels wirkungsvoll vermieden werden. Da es durch die zusätzliche Feuchtigkeit im Garraum 11 auch zu einer Vergrößerung des Gasvolumens kommt, wird wieder in den ersten Betriebsmodus 2 gewechselt. Dazu wird die Luft mit der Trocknereinheit 4 auf eine Raumluftfeuchte getrocknet und über die Auslasseinrichtung 13 aus dem Gargerät 1 abgeführt.

Nach dem Erreichen einer gewünschten bzw. im Garprogramm hinterlegten Zielfeuchte im Garraum 11 wird die zusätzliche Befeuchtung gestoppt. Die Garraumfeuchte wird hier nun wieder gehalten. Dazu wird von dem ersten Betriebsmodus 2 wieder in den zweiten Betriebsmodus 12 gewechselt. Die zweite Trocknereinheit 14 trocknet die Luft auf den Zielwert für die Garraumluft und führt diese über die Umlufteinrichtung 23 wieder zurück in den Garraum 11.

### Bezugszeichenliste

- 1: Gargerät
- 2: Betriebsmodus
- 3: Aufbereitungseinrichtung
- 4: Trocknereinheit
- 5: Reinigungseinheit
- 6: Sensoreinrichtung
- 10: Klimaeinrichtung
- 11: Garraum
- 12: Betriebsmodus
- 13: Auslasseinrichtung
- 14: Trocknereinheit
- 15: Katalysatoreinrichtung
- 16: Sensor
- 20: Gebläseeinrichtung
- 21: Garraumauslass
- 23: Umlufteinrichtung
- 24: Mehrwegeventil
- 26: Sensor
- 34: Kühleinrichtung
- 36: Sensor
- 44: Wärmepumpeneinrichtung
- 46: Sensor
- 54: Wärmetauscher
- 100: Backofen
- 101: Garraumtür
- 102: Komponente
- 103: Kühlkanal
- 104: Kühllufteinlass
- 105: Bedieneinrichtung
- 130: Auslassöffnung
- 200: Feuchtemaß
- 201: Zeit
- 202: Feuchteverlauf
- 230: Einlassöffnung

## Patentansprüche

1. Gargerät (1) mit wenigstens einem beheizbaren und durch wenigstens eine Garraumtür (101) verschließbaren Garraum (11) und mit wenigstens einer mit dem Garraum (11) strömungsverbundenen Aufbereitungseinrichtung (3) zum Trocknen von Luft aus dem Garraum (11),
**dadurch gekennzeichnet,**
**dass** die Aufbereitungseinrichtung (3) dazu geeignet und ausgebildet ist, in wenigstens einem ersten Betriebsmodus (2) die Luft auf ein geringeres Maß an Feuchte als in wenigstens einem zweiten Betriebsmodus (12) zu trocknen
und die im ersten Betriebsmodus (2) getrocknete Luft über wenigstens eine Auslasseinrichtung (13) wenigstens teilweise aus dem Gargerät (1) abzuführen und die im zweiten Betriebsmodus (12) getrocknete Luft über wenigstens eine Umlufteinrichtung (23) dem Garraum (11) wieder zuzuführen.

2. Gargerät (1) nach dem vorhergehenden Anspruch, **dadurch gekennzeichnet, dass** die Aufbereitungseinrichtung (3) dazu geeignet und ausgebildet ist, in dem ersten Betriebsmodus (2) die Luft auf eine Raumluftfeuchte zu trocknen.

3. Gargerät (1) nach einem der vorhergehenden Ansprüche, **dadurch gekennzeichnet, dass** die Aufbereitungseinrichtung (3) mit wenigstens einer Sensoreinrichtung (6) zur Überwachung der Raumluftfeuchte wirkverbunden ist und dazu geeignet und ausgebildet ist, in Abhängigkeit der sensorisch erfassten Raumluftfeuchte wenigstens ein Maß für eine Restfeuchte festzulegen, welches die in dem ersten Betriebsmodus (2) getrocknete Luft nach dem Trocknen aufweisen soll und die Luft wenigstens näherungsweise auf diese Restfeuchte zu trocknen.

4. Gargerät (1) nach einem der vorhergehenden Ansprüche, **dadurch gekennzeichnet, dass** die Aufbereitungseinrichtung (3) dazu geeignet und ausgebildet ist, in dem ersten Betriebsmodus (2) die Luft zu kühlen und insbesondere auf eine Temperatur unterhalb einer Raumtemperatur zu kühlen.

5. Gargerät (1) nach einem der vorhergehenden Ansprüche, **dadurch gekennzeichnet, dass** die Aufbereitungseinrichtung (3) mit wenigstens einer Sensoreinrichtung (6) zur Überwachung der Garraumfeuchte wirkverbunden ist und dass die Aufbereitungseinrichtung (3) dazu geeignet und ausgebildet ist, die Luft in dem ersten Betriebsmodus (2) zu trocknen, wenn die erfasste Garraumfeuchte über die Zeit zunimmt oder zunehmen soll.

6. Gargerät (1) nach dem vorhergehenden Anspruch, **dadurch gekennzeichnet, dass** die Aufbereitungseinrichtung (3) dazu geeignet und ausgebildet ist, die Luft wenigstens dann in dem zweiten Betriebsmodus (12) zu trocknen, wenn die erfasste Garraumfeuchte über die Zeit abnimmt oder abnehmen soll und/oder im Wesentlichen unverändert bleibt oder bleiben soll.

7. Gargerät (1) nach einem der vorhergehenden Ansprüche, umfassend wenigstens eine Klimaeinrichtung (10) zur Anpassung einer Garraumfeuchte während eines Garvorgangs auf wenigstens einen Zielwert und **dadurch gekennzeichnet, dass** die Aufbereitungseinrichtung (3) dazu geeignet und ausgebildet ist, die Luft in dem ersten Betriebsmodus (2) zu trocknen und abzuführen, wenn die Garraumfeuchte durch die Klimaeinrichtung (10) auf den Zielwert erhöht wird.

8. Gargerät (1) nach dem vorhergehenden Anspruch, **dadurch gekennzeichnet, dass** die Klimaeinrichtung (10) dazu geeignet und ausgebildet ist, mittels der Aufbereitungseinrichtung (3) die Garraumfeuchte auf wenigstens einen Zielwert zu verringern und/oder zu halten und dass die Aufbereitungseinrichtung (3) dazu geeignet und ausgebildet ist, die Luft in dem zweiten Betriebsmodus (12) zu trocknen, wenn die Garraumfeuchte verringert und/oder gehalten werden soll.

9. Gargerät (1) nach einem der vorhergehenden Ansprüche, **dadurch gekennzeichnet, dass** die Aufbereitungseinrichtung (3) dazu geeignet und ausgebildet ist, den Betriebsmodus (2, 12) durch eine Vorgabe wenigstens eines Garprogramms auszuwählen und/oder dass die Klimaeinrichtung (10) dazu geeignet und ausgebildet ist, die Garraumfeuchte auf wenigstens einen in einem Garprogramm hinterlegten Zielwert einzustellen.

10. Gargerät (1) nach einem der vorhergehenden Ansprüche, **dadurch gekennzeichnet, dass** die Aufbereitungseinrichtung (3) für jeden Betriebsmodus (2, 12) jeweils wenigstens eine Trocknereinheit (4, 14) umfasst.

11. Gargerät (1) nach dem vorhergehenden Anspruch, **dadurch gekennzeichnet, dass** die Trocknereinheiten (4, 14) in Reihe geschaltet sind.

12. Gargerät (1) nach einem der beiden vorhergehenden Ansprüche, **dadurch gekennzeichnet, dass** wenigstens einer Trocknereinheit (14) für den zweiten Betriebsmodus (12) wenigstens ein Mehrwegeventil (24) nachgeschaltet ist, welches wenigstens einen ersten Strömungsweg zum Einleiten der Luft in den Garraum (11) und wenigstens einen zweiten Strömungsweg zu der Trocknereinheit (4) für den ersten Betriebsmodus (2) umfasst.

13. Gargerät (1) nach einem der drei vorhergehenden Ansprüche, **dadurch gekennzeichnet, dass** die Trocknereinheit (4) für den ersten Betriebsmodus (2) über die Trocknereinheit (14) für den zweiten Betriebsmodus (12) mit dem Garraum (11) strömungsverbunden ist oder dass die Trocknereinheit (4) für den ersten Betriebsmodus (2) unmittelbar mit dem Garraum (11) strömungsverbunden ist.

14. Gargerät (1) nach einem der vier vorhergehenden Ansprüche, **dadurch gekennzeichnet, dass** die Trocknereinheit (4) für den ersten Betriebsmodus (2) mittels wenigstens einer thermoelektrischen Kühleinrichtung (34) und/oder mittels wenigstens einer Wärmepumpeneinrichtung (44) aktiv kühlbar ist und/oder dass die Trocknereinheit (14) für den zweiten Betriebsmodus (12) wenigstens einen luftgekühlten Wärmetauscher (54) umfasst.

15. Verfahren zum Betreiben eines Gargeräts (1) mit wenigstens einem beheizbaren und durch wenigstens eine Garraumtür (101) verschließbaren Garraum (11) und mit wenigstens einer mit dem Garraum (11) strömungsverbundenen Aufbereitungseinrichtung (3), mit welcher Luft aus dem Garraum (11) getrocknet wird,
**dadurch gekennzeichnet,**
**dass** die Luft mittels der Aufbereitungseinrichtung (3) in wenigstens einem ersten Betriebsmodus (2) auf ein geringeres Maß an Feuchte als in wenigstens einem zweiten Betriebsmodus (12) getrocknet wird
und **dass** die im ersten Betriebsmodus (2) getrocknete Luft über wenigstens eine Auslasseinrichtung (13) wenigstens teilweise aus dem Gargerät (1) abgeführt wird und dass die im zweiten Betriebsmodus (12) getrocknete Luft über wenigstens eine Umlufteinrichtung (23) dem Garraum (11) wieder zugeführt wird.

## Claims

1. Cooking appliance (1) comprising at least one heatable cooking chamber (11) which can be closed by means of at least one cooking chamber door (101) and comprising at least one processing device (3), which is fluidically connected to the cooking chamber (11), for drying air from the cooking chamber (11),
**characterised in that**
the processing device (3) is suitable and designed for drying the air in at least one first operating mode (2) to a lower level of moisture than in at least one second operating mode (12) and for at least partially removing the air dried in the first operating mode (2) from the cooking appliance (1) via at least one outlet device (13) and for returning the air dried in the second operating mode (12) to the cooking chamber (11) via at least one recirculation device (23).

2. Cooking appliance (1) according to the preceding claim, **characterised in that** the processing device (3) is suitable and designed for drying the air to a room air moisture in the first operating mode (2).

3. Cooking appliance (1) according to either of the preceding claims, **characterised in that** the processing device (3) is operatively connected to at least one sensor device (6) for monitoring the room air moisture and is suitable and designed for determining, depending on the room air moisture detected by the sensor, at least one level of residual moisture which the air dried in the first operating mode (2) should have after drying, and for drying the air at least approximately to this residual moisture.

4. Cooking appliance (1) according to any of the preceding claims, **characterised in that** the processing device (3) is suitable and designed for cooling the air in the first operating mode (2) and in particular for cooling it to a temperature below a room temperature.

5. Cooking appliance (1) according to any of the preceding claims, **characterised in that** the processing device (3) is operatively connected to at least one sensor device (6) for monitoring the cooking chamber moisture and **in that** the processing device (3) is suitable and designed for drying the air in the first operating mode (2) if the detected cooking chamber moisture increases or is to increase over time.

6. Cooking appliance (1) according to the preceding claim, **characterised in that** the processing device (3) is suitable and designed for drying the air at least in the second operating mode (12) if the detected cooking chamber moisture decreases or is to decrease over time and/or remains or is to remain substantially unchanged.

7. Cooking appliance (1) according to any of the preceding claims, comprising at least one air conditioning device (10) for adjusting a cooking chamber moisture to at least one target value during a cooking process and **characterised in that** the processing device (3) is suitable and designed for drying and removing the air in the first operating mode (2) if the cooking chamber moisture is increased to the target value by the air conditioning device (10).

8. Cooking appliance (1) according to the preceding claim, **characterised in that** the air conditioning device (10) is suitable and designed for reducing and/or maintaining the cooking chamber moisture to at least one target value by means of the processing device (3) and **in that** the processing device (3) is suitable and designed for drying the air in the second operating mode (12) if the cooking chamber moisture is to be reduced and/or maintained.

9. Cooking appliance (1) according to any of the preceding claims, **characterised in that** the processing device (3) is suitable and designed for selecting the operating mode (2, 12) by specifying at least one cooking program and/or **in that** the air conditioning device (10) is suitable and designed for setting the cooking chamber moisture to at least one target value stored in a cooking program.

10. Cooking appliance (1) according to any of the preceding claims, **characterised in that** the processing device (3) comprises at least one drying unit (4, 14) for each operating mode (2, 12).

11. Cooking appliance (1) according to the preceding claim, **characterised in that** the drying units (4, 14) are connected in series.

12. Cooking appliance (1) according to either of the two preceding claims, **characterised in that** at least one multi-way valve (24) is connected downstream of at least one drying unit (14) for the second operating mode (12), which valve has at least one first flow path for introducing the air into the cooking chamber (11) and at least one second flow path to the drying unit (4) for the first operating mode (2).

13. Cooking appliance (1) according to any of the three preceding claims, **characterised in that** the drying unit (4) for the first operating mode (2) is fluidically connected to the cooking chamber (11) via the drying unit (14) for the second operating mode (12) or **in that** the drying unit (4) for the first operating mode (2) is directly fluidically connected to the cooking chamber (11).

14. Cooking appliance (1) according to any of the four preceding claims, **characterised in that** the drying unit (4) for the first operating mode (2) can be actively cooled by means of at least one thermoelectric cooling device (34) and/or by means of at least one heat pump device (44), and/or **in that** the drying unit (14) for the second operating mode (12) comprises at least one air-cooled heat exchanger (54).

15. Method for operating a cooking appliance (1) comprising at least one heatable cooking chamber (11) which can be closed by means of at least one cooking chamber door (101) and comprising at least one processing device (3) which is fluidically connected to the cooking chamber (11) and by means of which air from the cooking chamber (11) is dried,
**characterised in that**
the air is dried by means of the processing device (3) in at least one first operating mode (2) to a lower level of moisture than in at least one second operating mode (12) and **in that** the air dried in the first operating mode (2) is removed at least in part from the cooking appliance (1) via at least one outlet device (13) and **in that** the air dried in the second operating mode (12) is returned to the cooking chamber (11) via at least one recirculation device (23).

## Revendications

1. Appareil de cuisson (1) comportant au moins une chambre de cuisson (11) pouvant être chauffée et pouvant être fermée par au moins une porte de chambre de cuisson (101), et comportant au moins un dispositif de traitement (3) en communication fluidique avec la chambre de cuisson (11) pour sécher l'air provenant de la chambre de cuisson (11),
**caractérisé en ce que**
le dispositif de traitement (3) est approprié et conçu pour sécher l'air dans au moins un premier mode de fonctionnement (2) à un niveau d'humidité plus faible que celui dans au moins un second mode de fonctionnement (12), pour évacuer l'air séché dans le premier mode de fonctionnement (2) au moins partiellement hors de l'appareil de cuisson (1) par l'intermédiaire d'au moins un dispositif de sortie (13), et pour acheminer de nouveau l'air séché dans le second mode de fonctionnement (12) vers la chambre de cuisson (11) par l'intermédiaire d'au moins un dispositif de circulation d'air (23).

2. Appareil de cuisson (1) selon la revendication précédente, **caractérisé en ce que** le dispositif de traitement (3) est approprié et conçu pour sécher l'air à un niveau d'humidité ambiante dans le premier mode de fonctionnement (2).

3. Appareil de cuisson (1) selon l'une des revendications précédentes, **caractérisé en ce que** le dispositif de traitement (3) est relié fonctionnellement à au moins un dispositif capteur (6) pour surveiller le niveau d'humidité ambiante, et est approprié et conçu pour déterminer, en fonction du niveau d'humidité ambiante détecté par le capteur, au moins un niveau d'une humidité résiduelle que l'air séché dans le premier mode de fonctionnement (2) doit présenter après le séchage, et pour sécher l'air au moins approximativement à cette humidité résiduelle.

4. Appareil de cuisson (1) selon l'une des revendications précédentes, **caractérisé en ce que** le dispositif de traitement (3) est approprié et conçu pour refroidir l'air dans le premier mode de fonctionnement (2), et en particulier pour le refroidir à une température inférieure à une température ambiante.

5. Appareil de cuisson (1) selon l'une des revendications précédentes, **caractérisé en ce que** le dispositif de traitement (3) est relié fonctionnellement à au moins un dispositif capteur (6) pour surveiller le niveau d'humidité de la chambre de cuisson, et **en ce que** le dispositif de traitement (3) est approprié et conçu pour sécher l'air dans le premier mode de fonctionnement (2) si le niveau d'humidité détecté de la chambre de cuisson augmente ou doit augmenter au cours du temps.

6. Appareil de cuisson (1) selon la revendication précédente, **caractérisé en ce que** le dispositif de traitement (3) est approprié et conçu pour sécher l'air au moins dans le second mode de fonctionnement (12) si le niveau d'humidité détecté de la chambre de cuisson diminue ou doit diminuer au cours du temps et/ou reste ou doit rester sensiblement inchangée.

7. Appareil de cuisson (1) selon l'une des revendications précédentes, comprenant au moins un dispositif de climatisation (10) destiné à ajuster le niveau d'humidité de la chambre de cuisson, lors d'un processus de cuisson, à au moins une valeur cible, et **caractérisé en ce que** le dispositif de traitement (3) est approprié et conçu pour sécher et évacuer l'air dans le premier mode de fonctionnement (2) si le niveau d'humidité de la chambre de cuisson est augmenté jusqu'à la valeur cible par le dispositif de climatisation (10).

8. Appareil de cuisson (1) selon la revendication précédente, **caractérisé en ce que** le dispositif de climatisation (10) est approprié et conçu pour réduire et/ou maintenir le niveau d'humidité de la chambre de cuisson jusqu'à/à au moins une valeur cible au moyen du dispositif de traitement (3), et **en ce que** le dispositif de traitement (3) est approprié et conçu pour sécher l'air dans le second mode de fonctionnement (12) si le niveau d'humidité de la chambre de cuisson doit être réduit et/ou maintenu.

9. Appareil de cuisson (1) selon l'une des revendications précédentes, **caractérisé en ce que** le dispositif de traitement (3) est approprié et conçu pour sélectionner le mode de fonctionnement (2, 12) par définition d'au moins un programme de cuisson et/ou **en ce que** le dispositif de climatisation (10) est approprié et conçu pour régler le niveau d'humidité de la chambre de cuisson à au moins une valeur cible enregistrée dans un programme de cuisson.

10. Appareil de cuisson (1) selon l'une des revendications précédentes, **caractérisé en ce que** le dispositif de traitement (3) comprend respectivement au moins une unité de séchage (4, 14) destinée à chaque mode de fonctionnement (2, 12).

11. Appareil de cuisson (1) selon la revendication précédente, **caractérisé en ce que** les unités de séchage (4, 14) sont montées en série.

12. Appareil de cuisson (1) selon l'une des deux revendications précédentes, **caractérisé en ce qu'**au moins une unité de séchage (14) destinée au second mode de fonctionnement (12) est suivie d'au moins une soupape à plusieurs voies (24), laquelle comprend au moins une première voie d'écoulement permettant d'introduire de l'air dans la chambre de cuisson (11) et au moins une seconde voie d'écoulement vers l'unité de séchage (4) destinée au premier mode de fonctionnement (2).

13. Appareil de cuisson (1) selon l'une des trois revendications précédentes, **caractérisé en ce que** l'unité de séchage (4) destinée au premier mode de fonctionnement (2) est en communication fluidique avec la chambre de cuisson (11) par l'intermédiaire de l'unité de séchage (14) destinée au second mode de fonctionnement (12), ou **en ce que** l'unité de séchage (4) destinée au premier mode de fonctionnement (2) est en communication fluidique directe avec la chambre de cuisson (11).

14. Appareil de cuisson (1) selon l'une des quatre revendications précédentes, **caractérisé en ce que** l'unité de séchage (4) destinée au premier mode de fonctionnement (2) peut être activement refroidie au moyen d'au moins un dispositif de refroidissement thermoélectrique (34) et/ou au moyen d'au moins un dispositif de pompe à chaleur (44), et/ou **en ce que** l'unité de séchage (14) destinée au second mode de fonctionnement (12) comprend au moins un échangeur de chaleur refroidi par air (54).

15. Procédé permettant de faire fonctionner un appareil de cuisson (1) comportant au moins une chambre de cuisson (11) pouvant être chauffée et pouvant être fermée par au moins une porte de chambre de cuisson (101), et comportant au moins un dispositif de traitement (3) en communication fluidique avec la chambre de cuisson (11) et avec lequel l'air provenant de la chambre de cuisson (11) est séché,
**caractérisé en ce que**
dans au moins un premier mode de fonctionnement (2), l'air est séché au moyen du dispositif de traitement (3) à un niveau d'humidité plus faible que celui dans au moins un second mode de fonctionnement (12)
**en ce que** l'air séché dans le premier mode de fonctionnement (2) est évacué au moins partiellement hors de l'appareil de cuisson (1) par l'intermédiaire d'au moins un dispositif de sortie (13), et **en ce que** l'air séché dans le second mode de fonctionnement (12) est de nouveau acheminé vers la chambre de cuisson (11) par l'intermédiaire d'au moins un dispositif de circulation d'air (23).
